# EUROPÄISCHE PATENTSCHRIFT

(11) **EP 1 995 156 B1**
(45) Veröffentlichungstag und Bekanntmachung des Hinweises auf die Patenterteilung: **30.06.2010**
(21) Anmeldenummer: 08001995.3
(22) Anmeldetag: 02.02.2008
(51) Int. Cl.: B62D 27/02, B62D 25/20, B62D 29/00

(54) **Tragstruktur eines Kraftfahrzeugs**
Support structure of a motor vehicle
Structure portante d'un véhicule automobile

(30) Priorität: 24.05.2007 DE 102007024172
(43) Veröffentlichungstag der Anmeldung: 26.11.2008
(73) Patentinhaber: Dr. Ing. h.c. F. Porsche AG, 70435 Stuttgart (DE)
(72) Erfinder: Schiebel, Dieter, 70825 Korntal-Muenchigen (DE); Lippold, Andrea, 70499 Stuttgart (DE)

(56) Entgegenhaltungen:
- EP-A- 0 995 666
- EP-A- 1 840 005
- DE-A1-102004 019 750

## Beschreibung

Bei der Erfindung wird ausgegangen von einer Tragstruktur eines Kraftfahrzeugs, gemäß Oberbegriff des Patentanspruchs 1.

Eine gattungsgemäße Tragstruktur ist aus der DE 198 08 392 A1 bekannt. Die Tragstruktur besitzt mehrere Knotenelemente, von denen zwei sich gegenüber liegen und ein Knotenelementpaar im Vorderwagen bilden. Jedes Knotenelement weist zumindest einen Längstragabschnitt auf, an den sich zumindest ein Längsträger in einer Richtung, hier beispielsweise nach vorne gerichtet, anschließen kann. Ferner besitzt jedes Knotenelement des Paares einen Querträgeranschluss, die sich gegenüber liegen und durch einen darauf aufgesteckten Querträger miteinander verbunden sind. Der Querträger ist als einteiliges geschlossenes Hohlprofil ausgeführt. Im Bereich des Hinterwagens kann ein weiteres Paar von Knotenelementen angeordnet sein, die - wie die vorderen Knotenelemente - über einen weiteren Querträger miteinander verbunden werden können. Zwischen den beiden Knotenelementpaaren können jeweils seitlich außen Seitenschweller und im Bereich der Bodengruppe innen liegend jeweils weitere Längsträger angeordnet sein.

Aus der nachveröffentlichten EP 1 840 005 A1 ist eine Tragstruktur eines Kraftfahrzeugs bekannt, die mit zumindest zwei sich gegenüberliegenden Knotenelementen ausgestattet ist, von denen jedes zumindest einen Längstragabschnitt und einen Querträgeranschluss aufweist. Ferner besitzt die Tragstruktur einen Querträger, der die Querträgeranschlüsse miteinander verbindet. Von jedem Querträgeranschluss geht ein profilierter Quertragabschnitt aus und die Quertragabschnitte sind in einem Überlappungsabschnitt miteinander verbunden. Dafür kann eine Klebeverbindung vorgesehen sein. Vervollständigt wird der Querträgers von einem darauf aufgesetzten offenen Tragprofil.

Aus der nachveröffentlichten DE 10 2006 014 979 geht eine Tragstruktur eines Kraftfahrzeugs hervor, von der ein auch als Längstragelement bezeichnetes Knotenelement an jeder Fahrzeugseite im Hinterwagen gezeigt ist. Zwischen den beiden Knotenelementen erstreckt sich über den Mitteltunnel ein Querträger, der als einseitig offenes Profil ausgebildet ist, das von einem Fortsatz der Knotenelemente verschlossen wird. Die Elemente der Tragstruktur können durch Kleben, Nieten, insbesondere Stanznieten, und/oder Schweißen miteinander verbunden sein.

Aufgabe der Erfindung ist es, eine Tragstruktur der eingangs genannten Art zu optimieren.

Gelöst wird diese Aufgabe mit einer Tragstruktur für ein Kraftfahrzeug, die die in Anspruch 1 genannten Merkmale aufweist. Ausgestaltungen der Erfindung sind Gegenstand der Unteransprüche.

Die mit der Erfindung hauptsächlich erzielten Vorteile sind darin zu sehen, dass durch den optimierten Querträger zwischen den beiden Knotenelementen die Tragstruktur in ihrer Steifigkeit sowohl in Querrichtung als auch bei Einwirken von Drehmomenten (Torsion) optimiert ist. Außerdem lässt sich die erfindungsgemäße Tragstruktur, insbesondere im Leichtbau, auf besonders einfache Weise zusammensetzen, was insbesondere durch die erfindungsgemäße Klebeverbindung zwischen den beiden Quertragabschnitten erreicht wird. Darüber hinaus ermöglicht die erfindungsgemäße Tragstruktur einen Toleranzausgleich der Maße in Fahrzeuglängs- und -querrichtung. Die Rippenstrukturen besitzen eine Verstärkungseigenschaft.

Die Steifigkeit der Tragstruktur lässt sich mit den Merkmalen des Patentanspruchs 2 weiter verbessern. Die Verstärkungsstruktur kann als Fachwerkstruktur mit verschieden oder gleichgerichtet verlaufenden Stegen bzw. Rippen ausgeführt sein. Besonders bevorzugt wird eine Ausgestaltung, bei der die Quertragabschnitte mit ihren Rippenstrukturen zusätzlich - wie Anspruch 4 angibt - für eine großflächige Klebeverbindung bereitstehen können.

Die Erfindung wird nachfolgend anhand eines Ausführungsbeispiels mit Bezug auf die Zeichnung näher erläutert. Es zeigen:
- Fig. 1: stark vereinfacht ausschnittweise eine Tragstruktur eines Kraftfahrzeugs,
- Fig. 2: in einem Schnitt entlang der Linie II-II in Fig. 1 eine Verstärkungsstruktur nach einem ersten Ausführungsbeispiel und
- Fig. 3: in einem Schnitt eine Verstärkungsstruktur nach einem zweiten Ausführungsbeispiel.

Von einer hier nur ausschnittweise dargestellten Tragstruktur 1 eines sonst nicht näher gezeigten Kraftfahrzeugs sind seitliche, sich gegenüberliegende Knotenelemente 2, 3 eines Hinterwagens gezeigt, die ein Knotenelementpaar bilden. Jedes Knotenelement 2, 3 weist einen in Fahrzeuglängsrichtung FL verlaufenden Längstragabschnitt 4 auf, der an seinem heckseitigen Ende 5 eine Aufnahme 6 für einen heckseitigen Längsträger (nicht gezeigt) besitzt. Am gegenüberliegenden, vorderen Ende 7 weist jedes Knotenelement 2 einen außen liegenden, jedoch nach innen gerichteten Querträgerabschnitt 8 auf, der sich bis zu einem Mitteltunnel 9 erstrecken kann. Zwischen dem heckseitigen Ende 5 und dem vorderen Ende 7 besitzt der Längstragabschnitt 4 eine Radkastenkontur mit einem Federbeindom 4'. Zwischen den beiden äußeren Querträgerabschnitten 8 der Knotenelemente 2, 3 liegt noch ein in Fahrzeugquerrichtung FQ verlaufender weiterer, innerer Querträgerabschnitt, der nachfolgend als Querträger 10 bezeichnet wird. Dieser Querträger 10 ist mit inneren Querträgeranschlüssen 11 verbunden, die von den Querträgerabschnitten 8 noch oben gerichtet ausgehen. Die Querträgeranschlüsse 11 können bogenförmig dem Verlauf des Mitteltunnels 9 zumindest teilweise folgend ausgeführt sein oder sich über den Mitteltunnel 9 hinweg erstrecken.

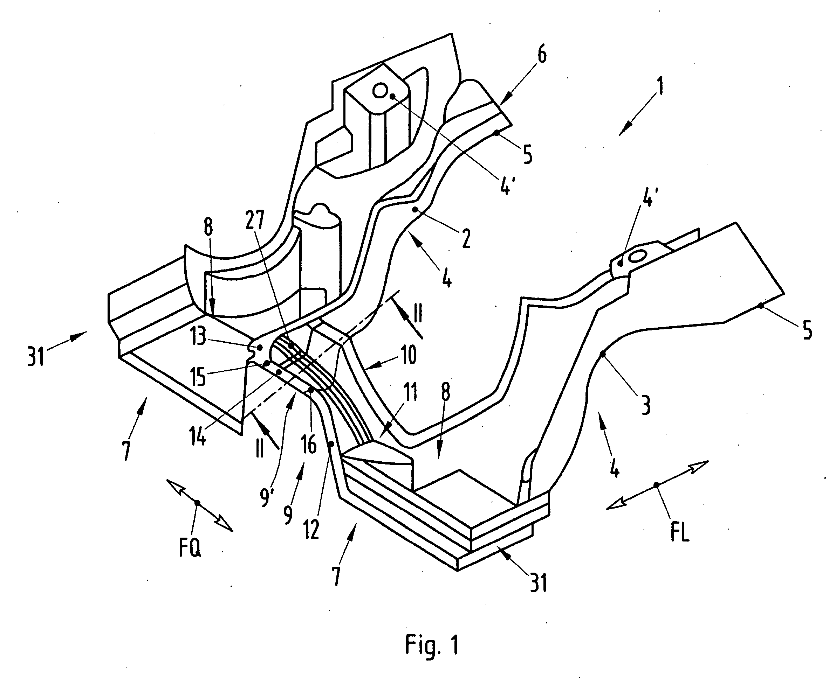

Im gezeigten Ausführungsbeispiel schließen sich einstückig an die Querträgeranschlüsse 11 im Querschnitt profilierte Quertragabschnitte 12 und 13 an, die in einem Überlappungsabschnitt 14 aufeinander liegen. Querträgeranschlüsse 11 und Quertragabschnitt 12 und 13 können jeweils als separate Bauteile ausgeführt sein. In bevorzugter Ausführungsform jedoch sind jeweils ein Querträgeranschluss 11 und der entsprechend zugeordnete Quertragabschnitt 12 oder 13 als ein zusammenhängendes Bauteil realisiert und vorzugsweise einstückig mit dem entsprechenden äußeren Querträgerabschnitt 8 ausgeführt, wie dies in Fig. 1 dargestellt ist. Darüber hinaus ist bevorzugt vorgesehen, jedes Knotenelement 2, 3 mit den zugehörenden Abschnitten, nämlich den Querträgerabschnitt 8, Querträgeranschluss 11, Quertragabschnitt 12 bzw. 13 und den Längstragabschnitt 4 mit Federbeindom 4', einstückig als Leichtmetall-Gussteil auszubilden.

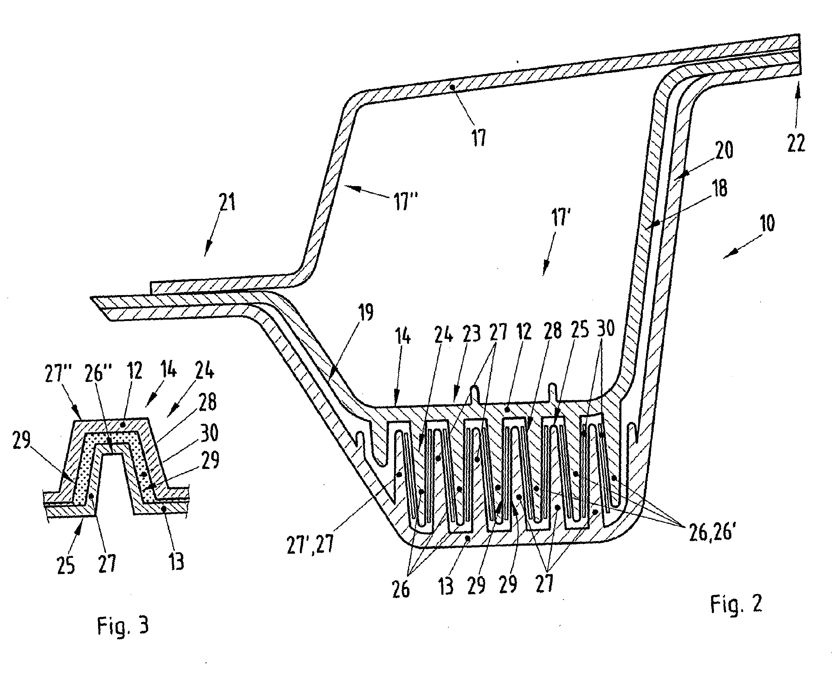

Der Quertragabschnitt 12 reicht mit seinem Ende 15 etwa bis zum Querträgeranschluss 11 des gegenüberliegenden Knotenelements 2. Gleiches gilt für den Quertragabschnitt 13 mit seinem gestrichelt eingezeichneten Ende 16. Zur Vervollständigung des Querträgers 10 wird - wie Fig. 2 zeigt - noch ein offenes Tragprofil 17 auf die somit eine Unterschale 17' bildenden Quertragabschnitte 12 und 13 aufgesetzt und damit verbunden, so dass als Querträger 10 ein im Querschnitt zusammengesetztes, geschlossenes Hohlprofil 18 gebildet wird. Die Quertragabschnitte 12 und 13 sind in ihrem Querschnitt vorzugsweise U-förmig profiliert, so dass ein zusammengesetztes U-Profil mit aufeinander liegenden Schenkeln gebildet wird, die jeweils zwei Schenkelpaare 19 bzw. 20 mit einer unterschiedlichen Höhe bilden können. Das offene Tragprofil 17 wird entsprechend im Querschnitt daran angepasst ausgeführt, also insbesondere gekröpft (Bezugszeichen 17") realisiert sein, wie dies deutlich in Fig. 2 zu sehen ist. So lassen sich die Flansche bildenden Enden 21 und 22 des geschlossenen Hohlprofils 18 beispielsweise durch Kleben und/oder Umformfügen und/oder Schweißen miteinander verbinden.

Jeweils von der Basis 23 der das U-Profil bildenden Quertragabschnitte 12 und 13 gehen aufeinander zu gerichtete Verstärkungsstrukturen 24 und 25 vorzugsweise einstückig aus, von denen jede Verstärkungsstruktur 24 bzw. 25 vorzugsweise mehrere parallel und mit Abstand zueinander verlaufende Rippen 26 bzw. 27 aufweist, die zumindest in Fahrzeugquerrichtung FQ orientiert sind, wie dies für die Rippen 27 in Fig. 1 angedeutet ist. Somit greifen die beiden Verstärkungsstrukturen 24 und 25, die somit als Rippenstrukturen mit Verstärkungseigenschaft ausgeführt sind, kammartig ineinander, so dass zwischen zwei benachbarten Rippen 26 der Verstärkungsstruktur 24 jeweils eine Rippe 27 der anderen Verstärkungsstruktur 25 und umgekehrt eingreift. Für eine dauerhafte und steife Verbindung der beiden Quertragabschnitte 12 und 13 wird insbesondere im Überlappungsbereich 14 eine Klebeverbindung 28 vorgesehen, bei der insbesondere die seitlichen Wände 29 der Rippen 26 bzw. 27 entweder einseitig oder beidseitig mit einer Klebstoffschicht 30 versehen sind. Darüber hinaus könnte sich die Klebeverbindung 28 bis in den Bereich der Schenkelpaare 19 und/oder 20 bzw. bis zu den Enden 21 und 22 erstrecken.

In den gezeigten Ausführungsbeispielen nach Fig. 2 und 3 sind die Verstärkungsstrukturen 24 und 25 und insbesondere die Rippen 26 und 27 einstückig mit dem jeweiligen Quertragabschnitt 13 bzw. 13 ausgeführt, obwohl die Verstärkungsstrukturen 24 und 25 grundsätzlich auch als separate Bauteile realisiert sein könnten, die mit dem jeweiligen Quertragabschnitt 12 bzw. 13 verbunden sind. Gemäß Fig. 2 sind die Verstärkungsstrukturen 24 und 25 und insbesondere die Rippen 26 bzw. 27 als Vollprofil 26' und 27' ausgeführt; alternativ oder ggf. alternierend könnten geschlossene hohle Profile dafür vorgesehen sein.

Es wäre - wie Fig. 3 zeigt - wahlweise möglich, die Verstärkungsstrukturen 24 und 25 zu prägen, so dass rippenähnliche Strukturen gebildet sind, also durch Umformung hergestellte Sicken 26" und 27" vorzusehen, die - wie zuvor beschrieben - kammartig ineinander greifen. Im weiteren Sinne könnten die Verstärkungsstrukturen 24 und 25 quasi wellblechartig mit beliebigem Querschnitt ausgeführt und ineinander greifend angeordnet sein. Nach Fig. 3 ist der Querschnitt der Sicken 26" bzw. 27" trapezförmig, er könnte alternativ dreieckig, halbkreisförmig oder halboval oder dergleichen gewählt sein. Die eben beschriebenen Querschnitte für die Sicken 26" und 27" könnten analog für die Rippen 26 und 27 (Fig. 2) vorgesehen sein. Im Übrigen sind in Fig. 3 gleiche bzw. gleich wirkende Teile mit denselben Bezugszeichen versehen, die auch in den übrigen Fig. 1 und 2 verwendet sind.

Der Überlappungsabschnitt 14 ist im Ausführungsbeispiel etwa auf ein Mitteltunneldach 9' des Mitteltunnels 9, also den oben liegenden Abschnitt der Quertragabschnitte 12 und 13, begrenzt. Der Überlappungsabschnitt 14 zwischen den Enden 15 und 16 (Fig. 1) könnte jedoch alternativ kürzer oder länger als dargestellt ausgeführt sein und sich beispielsweise bis in die Bereiche der Querträgeranschlüsse 11 erstrecken, d.h. etwa bis an die Querträgerabschnitte 8 heranreichen. An den außen liegenden Querträgerabschnitt 8 kann sich im Übrigen außen bei Bezugszeichen 31 ein so genannter Seitenschweller (nicht gezeigt) anschließen. Demnach bilden die ggf. oben offenen oder mit hier nicht gezeigten Schließelementen versehenen Querträgerabschnitte 8 und der innere Querträger 10 aneinandergereiht einen durchgehenden Träger zwischen zwei Seitenschwellern der Tragstruktur 1, die mit einem nicht dargestellten vorderen Knotenelementpaar verbunden sein können. Außerdem kann sich an das Ende 7 ein nicht gezeigter Boden der Tragstruktur 1 anschließen, der eine den Mitteltunnel 9 fortsetzende Struktur umfassen kann.

## Patentansprüche

1. Tragstruktur (1) eines Kraftfahrzeugs, mit zumindest zwei sich gegenüberliegenden Knotenelementen (2, 3), von denen jedes zumindest einen Längstragabschnitt (4) und einen Querträgeranschluss (11) aufweist, und mit einem Querträger (10), der die Querträgeranschlüsse (11) miteinander verbindet, **dadurch gekennzeichnet, dass** von jedem Querträgeranschluss (11) ein profilierter Quertragabschnitt (12, 13) ausgeht, dass die Quertragabschnitte (12, 13) in einem Überlappungsabschnitt (14) durch eine Klebeverbindung (28) miteinander verbunden sind, dass zur Bildung des Querträgers (10) zumindest ein offenes Tragprofil (17) aufgesetzt ist, und dass im Überlappungsabschnitt (14) von den Quertragabschnitten (12, 13) Rippenstrukturen ausgehen, die kammartig ineinander greifen.

2. Tragstruktur nach Anspruch 1, **dadurch gekennzeichnet, dass** die Quertragabschnitte (12, 13) im Überlappungsabschnitt (14) mit einer Verstärkungsstruktur (24, 25) versehen sind.

3. Tragstruktur nach Anspruch 1 oder 2, **dadurch gekennzeichnet, dass** die Verstärkungsstrukturen (24, 25), insbesondere die Rippenstrukturen als Vollprofil ((26', 27') oder als geprägte Sicken (26", 27") ausgebildet sind.

4. Tragstruktur nach einem der vorhergehenden Ansprüche, **dadurch gekennzeichnet, dass** die Verstärkungsstrukturen (24, 25), insbesondere die Rippenstrukturen miteinander verklebt sind.

## Claims

1. Support structure (1) of a motor vehicle, with at least two opposite junction elements (2, 3), each of which has at least one longitudinal support portion (4) and a cross member connection (11), and with a cross member (10) which connects the cross member connections (11) to each other, **characterized in that** a profiled transverse support portion (12, 13) originates from each cross member connection (11), **in that** the transverse support portions (12, 13) are connected to each other in an overlapping portion (14) by an adhesive connection (28), **in that** at least one open support profile (17) is attached to form the cross member (10), and **in that**, in the overlapping portion (14), rib structures originate from the transverse support portions (12, 13) and mesh together in the manner of a comb.

2. Support structure according to Claim 1, **characterized in that** the transverse support portions (12, 13) are provided in the overlapping portion (14) with a reinforcing structure (24, 25).

3. Support structure according to Claim 1 or 2, **characterized in that** the reinforcing structures (24, 25), in particular the rib structures, are designed as a solid profile (26', 27') or as embossed beads (26", 27'').

4. Support structure according to one of the preceding claims, **characterized in that** the reinforcing structures (24, 25), in particular the rib structures, are adhesively bonded to each other.

## Revendications

1. Structure portante (1) d'un véhicule automobile, comprenant au moins deux éléments de noeud opposés (2,3), dont chacun présente au moins une portion portante longitudinale (4) et un raccord de traverse (11), et comprenant une traverse (10), qui relie l'un à l'autre les raccords de traverse (11), **caractérisée en ce qu'**une portion portante transversale profilée (12, 13) part de chaque raccord de traverse (11), **en ce que** les portions portantes transversales (12, 13) sont connectées l'une à l'autre dans une portion de chevauchement (14) par un assemblage collé (28), **en ce que** pour former la traverse (10), au moins un profilé porteur ouvert (17) est mis en place, et **en ce que** dans la portion de chevauchement (14), des structures nervurées partent des portions portantes transversales (12, 13) et viennent en prise les unes dans les autres à la manière d'un peigne.

2. Structure portante selon la revendication 1, **caractérisée en ce que** les portions portantes transversales (12, 13) sont pourvues d'une structure de renforcement (24, 25) dans la portion de chevauchement (14).

3. Structure portante selon la revendication 1 ou 2, **caractérisée en ce que** les structures de renforcement (24, 25), en particulier les structures nervurées, sont réalisées sous forme de profilé massif (26' ; 27') ou sous forme de moulures gaufrées (26" ; 27").

4. Structure portante selon l'une quelconque des revendications précédentes, **caractérisée en ce que** les structures de renforcement (24, 25), en particulier les structures nervurées, sont collées les unes aux autres.
